# EUROPÄISCHE PATENTSCHRIFT

(11) **EP 0 735 643 B1**
(45) Veröffentlichungstag und Bekanntmachung des Hinweises auf die Patenterteilung: **11.06.1997**
(21) Anmeldenummer: 94119545.5
(22) Anmeldetag: 09.12.1994
(51) Int. Cl.: H02K 5/10, H02K 5/14

(54) **Abgedichtete Verbindungsvorrichtung zwischen zwei Gehäuse-Stirnseiten**
Sealed jointing device between two casing heads
Dispositif d'assemblage de joints étanches entre deux têtes de boîtier

(43) Veröffentlichungstag der Anmeldung: 02.10.1996
(73) Patentinhaber: SIEMENS AKTIENGESELLSCHAFT, 80333 München (DE)
(72) Erfinder: Deynet, Rolf, D-97074 Würzburg (DE)

(56) Entgegenhaltungen:
- CH-A- 512 850
- DE-A- 3 823 404
- DE-A- 4 235 962
- DE-U- 9 107 992
- FR-A- 2 109 791

## Beschreibung

Die Erfindung bezieht sich auf eine abgedichtete Verbindungsvorrichtung zwischen zwei Gehäuse-Stirnseiten gemäß Patentanspruch 1.

Durch die DE-A1-42 35 962 ist eine Hydraulikpumpe mit einer feuchtigkeitsdichten stirnseitigen Anlage zwischen dem Topfrand eines topfförmigen Motorgehäuses eines Kommutatormotors einerseits und einem Pumpengehäuse andererseits bekannt, wobei zur Abdichtung eine in der Dichtungsebene angeordnete Kunststoff-Bürstentragplatte mit einstückig angeformten Dichtlippen gegen die Stirnseite des Gehäuses bzw. den Topfrand des Motorgehäuses anliegt.

Es ist auch in der nicht vorveröffentlichten EP-A-0 682 398 vorgeschlagen worden, bei einem ähnlichen Motor-Pumpenaggregat die mit ihrem Außenrand zwischen den zu verbindenden Gehäuse-Stirnseiten sich erstreckende Kunststoff-Bürstentragplatte in ihrer stirnseitigen Anlage zu dem Rand des Motorgehäuses einerseits bzw. zu der Stirnfläche des Pumpengehäuses andererseits mit angespritzten Dichtflächen zu versehen.

Gemäß Aufgabe vorliegender Erfindung soll eine abgedichtete Verbindungsvorrichtung zwischen zwei Gehäuse-Stirnseiten mit einem plattenförmigen Zwischenteil, insbesondere einer Kunststoff-Bürstentragplatte in der Ebene der Gehäuse-Stirnseiten, geschaffen werden, die in für einen billigen Serieneinsatz vorteilhafter Weise einfach herstellbar und montierbar ist und trotzdem eine volle Tauchdichtigkeit, insbesondere auch bei im Bereich der Verbindungsvorrichtung durchgeführten äußeren Anschlußleitungen, gewährleistet.

Die Lösung dieser Aufgabe gelingt durch die Lehre des Anspruchs 1; vorteilhafte Ausgestaltungen der Erfindung sind jeweils Gegenstand der Unteransprüche.

Die erfindungsgemäße Verbindungsvorrichtung erlaubt einerseits die Herstellung der Dichtungen durch Spritzen und Vulkanisieren örtlich und zeitlich unabhängig von dem sie später tragenden Zwischenteil sowie ohne Rücksichtnahme auf dessen ansonsten notwendige hohe Wärmebeständigkeit und erlaubt vor dem Aufziehen des Dichtungsringkörper auf das Zwischenteil in montage- und fertigungstechnisch vorteilhafter Weise das dichtende Durchstecken der Anschlußleitungen durch die an den Dichtungsringkörper angeformten Dichtungsschläuche, derart daß die Durchführung der Anschlußleitungen im Bereich der durch die Gehäuse-Stirnseiten angedrückten Dichtungsflächen ohne Einfluß auf das Quetschverhalten dieser Dichtungsflächen bleibt und somit eine über die gesamte Dichtungsfläche gleichmäßige Abdichtung gewährleistet ist.

Die Anschlußleitungen bestehen zweckmäßigerweise zumindest im Bereich der dichtenden Anlage der Dichtungsschlauche aus isolierten elastischen Kabelleitungen, die nach einer weiteren Ausgestaltung der Erfindung mit einem inneren abisolierten Ende an Kontaktleitungen des Zwischenteils, das zweckmäßigerweise als Bürstentragplatte eines Kommutatormotors ausgebildet ist, angeschlossen sind.

Insbesondere bei einer Verbindungsvorrichtung zwischen einem Motorgehäuse einerseits und einem Pumpengehäuse andererseits ist nach einer Ausgestaltung der Erfindung das Zwischenteil mit einem von Inneren des Motorgehäuses nach außen führenden eingebetteten Entlüftungskanal versehen, der ebenso wie die Anschlußleitungen radial außerhalb des dichtenden Anlagebereichs der Gehäuse-Stirnseiten durch einen an ihm dichtend anliegenden, an den Dichtungsringkörper angeformten Dichtungsschlauch hindurchgesteckt ist, derart daß auch im Bereich des Entlüftungskanals eine gleichmäßige Dichtungsanlage zwischen dem Zwischenteil einerseits und dem axial stirnseitig anliegenden Motorgehäuse bzw. Pumpengehäuse gewährleistet werden kann.

Nach einer Ausgestaltung der Erfindung wird zur abgedichteten Verbindung das Zwischenteil nicht nur als zweckmäßiges Tragteil für den auf seinen Außenrand aufspannbaren Dichtungsringkörper und als Bürstentragplatte bei Verwendung eines mit einem zweiten Gehäuse zu verbindenden Kommutatormotors sondern auch zur Ausrichtung und wellenseitigen Abdichtung des Kommutatormotors bei seiner stirnseitigen Verbindung mit dem weiteren Gehäuse, insbesondere einem Pumpengehäuse, dadurch benutzt, daß das Motor-Rotorwellenende kommutatorseitig über ein im Festsitz aufgestecktes Rotorwellenlager unmittelbar in eine Lageraufnahme des weiteren Gehäuses zentriert gelagert ist und die gegenüber dem Motorgehäuse fixierte Bürstentragplatte radial dichtend an dem Motor-Rotorwellenende anliegt.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: die axiale Draufsicht auf einen erfindungsgemäß als getrenntes Bauteil ausgebildeten Dichtungsringkörper mit radial angeformten Dichtungsschläuchen zur feuchtigkeitsdichten Herausführung von Anschlußleitungen und eines Entlüftungskanals im Bereich der Dichtungsebene;
- FIG 2: einen Schnitt durch den Dichtungsringkörper gemäß FIG 1 im Schnittverlauf II-II;
- FIG 3: in einem Teilausschnitt die Verbindungsvorrichtung im Bereich des durch die Dichtungsebene heraustretenden Entlüftungskanals;
- FIG 4: eine radiale Draufsicht auf den austretenden Entlüftungskanal;
- FIG 5,6: in einem Teilausschnitt zwei Alternativen von im Bereich der Dichtungsanlage herausgeführten Anschlußleitungen;
- FIG 7: die radiale Draufsicht auf die Herausführung der Anschlußleitungen gemäß FIG 5,6;
- FIG 8: in einem Detailausschnitt eine bereits vorgeschlagene abgedichtete Verbindungsvorrichtung mit auf das Zwischenteil aufgespritzten Dichtungsauflagen;
- FIG 9: in einem Detailausschnitt eine bereits vorgeschlagene Herausführung eines Entlüftungskanals im Bereich der Dichtungsanlage mit aufgespritzten Dichtungsauflagen;
- FIG 10: in einer Gesamtansicht ein Motor-Pumpen-Aggregat mit einer bereits vorgeschlagenen dichtenden Verbindungsvorrichtung zwischen Motorgehäuse und Pumpengehäuse mit auf das Zwischenteil aufgespritzten Dichtungsauflagen.

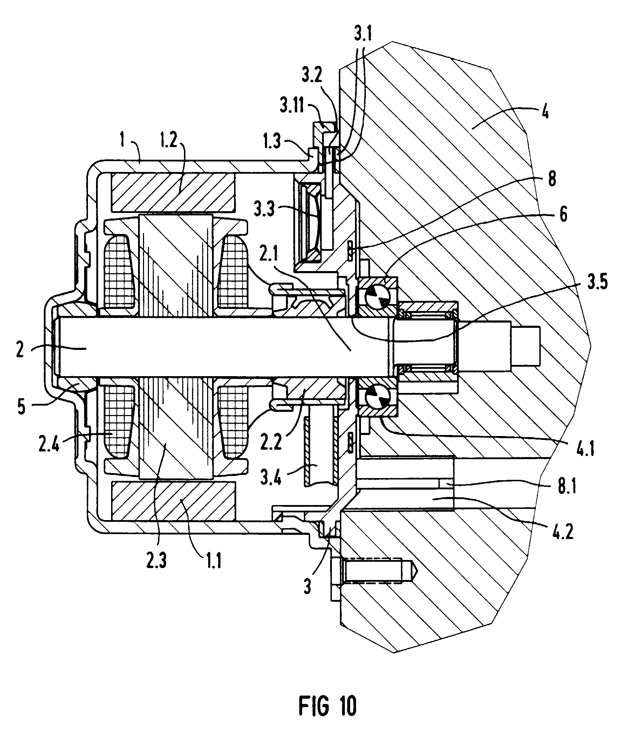

FIG 10 zeigt zur einleitenden Erläuterung in einem axialen Teil-Längsschnitt ein Motor-Pumpen-Aggregat mit einem topfförmigen Motorgehäuse 1 eines Kommutatormotors, das mit seinem Topfrand 1.3 stirnseitig dichtend gegen ein Pumpengehäuse 4 anliegt und mit diesem z.B. verschraubbar ist. Am Innenumfang des Motorgehäuses 1 sind zur magnetischen Erregung Erregermagnete 1.1;1.2 befestigt. An dem Topfrand 1.3 des Motorgehäuses 1 liegt als Zwischenteil eine vorzugsweise aus Kunststoff gespritzte und insbesondere im wesentlichen plattenförmig ausgebildete Bürstentragplatte 3 fixiert an, die zumindest randseitig an beiden Stirnseiten mit einer vorzugsweise elastischen Dichtungsauflage 3.1 derart versehen ist, daß beim Anschrauben des Motorgehäuses 1 gegen die Stirnseite des Pumpengehäuses 4 beide Bauteile feuchtigkeitsdicht gegeneinander verschlossen sind. Gemäß einer bereits vorgeschlagenen Lösung soll diese Dichtungsauflage 3.1 an das Zwischenteil in Form der Bürstentragplatte 3 angespritzt sein; eine solche Abdichtung gewährleistet zwar eine hohe Tauchdichtigkeit, jedoch erfordert dieser Fertigungsvorgang eine hohe Wärmefestigkeit des Zwischenteils und bedingt hohe Haltezeiten des gesamten Zwischenteils.

Die einen Kommutator 2.2 sowie ein Rotorblechpaktet 2.3 mit einer Rotorwicklung 2.4 aufnehmende Rotorwelle 2 ist an ihrem linken Ende in einem als B-seitiges Rotorwellenlager 5 vorgesehenen Kalottenlager und an ihrem rechten Ende in einem als A-seitiges Rotorwellenlager 6 vorgesehenen Kugellager gelagert. Das auf das rechte Rotorwellenende 2.1 der Rotorwelle 2 im Preßsitz aufgesteckte A-seitige Rotorwellenlager 6 wird unmittelbar radial zentriert in einer Lageraufnahme 4.1 des Pumpengehäuses 4 aufgenommen und in Richtung der B-Seite axial gegen die Bürstentragplatte 3 durch Anlage mit seinem Lageraußenring abgestützt.

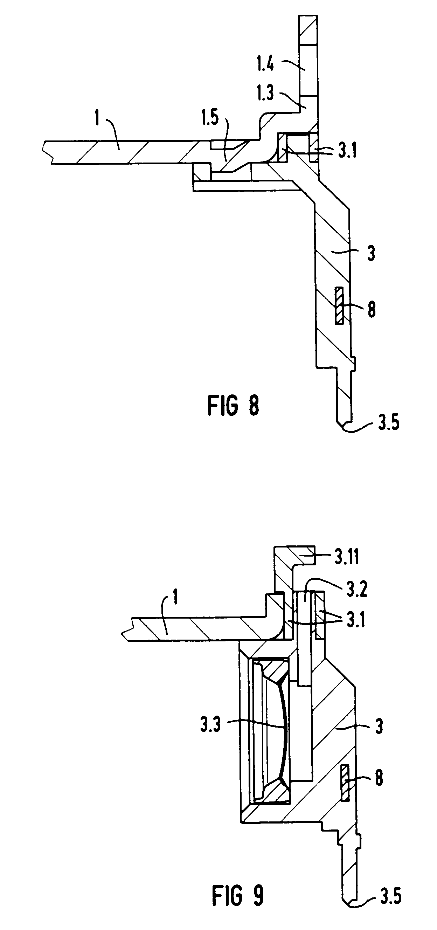

Der Kommutatormotor ist in vorteilhafter Weise als vormontierbare Bauteileinheit mit axial an der offenen Motorgehäuseseite befestigter, insbesondere - wie aus FIG 8 ersichtlich - mittels über den Umfang verteilter Rastmittel 1.5 verrasteter und mit Dichtungsauflagen 3.1 versehener Bürstentragplatte 3 ausgebildet und mit dem axial außen vor der Bürstentragplatte 3 auf das Rotorwellenende 2.1 im Festsitz aufgesetzten A-seitigen Rotorwellenlager 6 zentriert zu dem Pumpengehäuse 4 in dessen Lageraufnahme 4.1 axial eingesteckt.

Die vormontierte Motor-Bauteileinheit wird über ihre Bürstenhalterung 3 an dem A-seitigen Rotorwellenlager 6 und damit der Lageraufnahme 4.1 des Pumpengehäuses 4 unmittelbar radial dichtend abgestützt und kann somit insgesamt bei einer axialen Steckmontage zwischen Motorgehäuse 1 einerseits und Pumpengehäuse 4 andererseits vor der endgültigen gegenseitigen Verflanschung zentriert ausgerichtet werden; beim Ausführungsbeispiel nach FIG 10 erfolgt die unmittelbare Zentrierung zu dem Pumpengehäuse 4 über die Bürstentragplatte 3 und die Rotorwelle 2, an der die Bürstentragplatte 3 mit einem schneidenförmigen Anlagerand 3.5 zentrierend und dichtend anliegt; durch den schneidenförmigen Anlagerand 3.5 wird einerseits ein geringer Reibungswiderstand und andererseits eine gute Abdichtung derart erreicht, daß eventuell austretende Pumpen-Leckflüssigkeit nicht in das Innere des Motorgehäuses 1 gelangen kann.

In vorteilhafter Weise sind die gegenseitigen Schaltverbindungen zwischen den von der Bürstentragplatte 3 aufzunehmenden Bauteilen bzw. Kontaktierungen in Form eines in die Bürstentragplatte 3 derart eingegossenen Stanzgitters 8 ausgeführt, daß insbesondere an den dichtenden Anlagerändern zwischen dem Motorgehäuse 1 einerseits und dem Pumpengehäuse 4 andererseits die Stanzgitter-Verbindungen beidseitig in den Kunststoffgrundkörper der Bürstenhalterung 3 eingebettet, insbesondere eingespritzt, sind. Wie insbesondere aus FIG 10 ersichtlich, ist zum Anschluß von Anschlußleitungen, insbesondere Steuerleitungen, mit Schaltverbindungen der Bürstentragplatte 3 an das Stanzgitter 8 eine axial vorstehende Steck-Kontaktierung 8.1 angeformt, die aus der Bürstentragplatte 3 axial hervorstehend in eine, vorzugsweise axial verlaufende Kontaktierungsöffnung 4.2 im Pumpengehäuse 4 derart hineinragt, daß eine Gegenkontaktierung von einer auf der motorabgewandten Seite des Pumpengehäuses 4 stirnseitig anliegenden, hier nicht dargestellten Steuereinheit erfolgen kann.

Wie insbesondere aus FIG 9 ersichtlich, ist die dichtend zwischen den voreinanderliegenden Teilen des Motorgehäuses 1 einerseits und des Pumpengehäuses 4 andererseits liegende Bürstentragplatte 3 mit einem von dem Inneren des Motorgehäuses 1 nach außen führenden Entlüftungskanal 3.2 versehen, der vorzugsweise radial verlaufend in die Bürstentragplatte 3 eingegossen ist. Zum Schutz gegen einen direkten äußeren Eintritt von Feuchtigkeit in diesen Entlüftungskanal 3.2 ist an die randseitig auf der Bürstentragplatte 3 aufgebrachte Dichtungsauflage 3.1 ein Dachteil 3.11 einstückig angeformt, der die Austrittsöffnung des Entlüftungskanal 3.2 zur offenen axialen und radialen Motorseite abdeckt. Zum weiteren Schutz gegen ein Eindringen von Feuchtigkeit in das Innere des Motorgehäuses 1 ist das radial innere Ende des Entlüftungskanals 3.2 zum Inneren des Motorgehäuses 1 hin durch eine Membran-Dichtung 3.3 verschlossen, die einerseits eine Entlüftung vom Inneren des Motorgehäuses 1 nach außen zuläßt jedoch ein Eindringen von Feuchtigkeit von außen in das Innere des Motorgehäuses 1 verhindert.

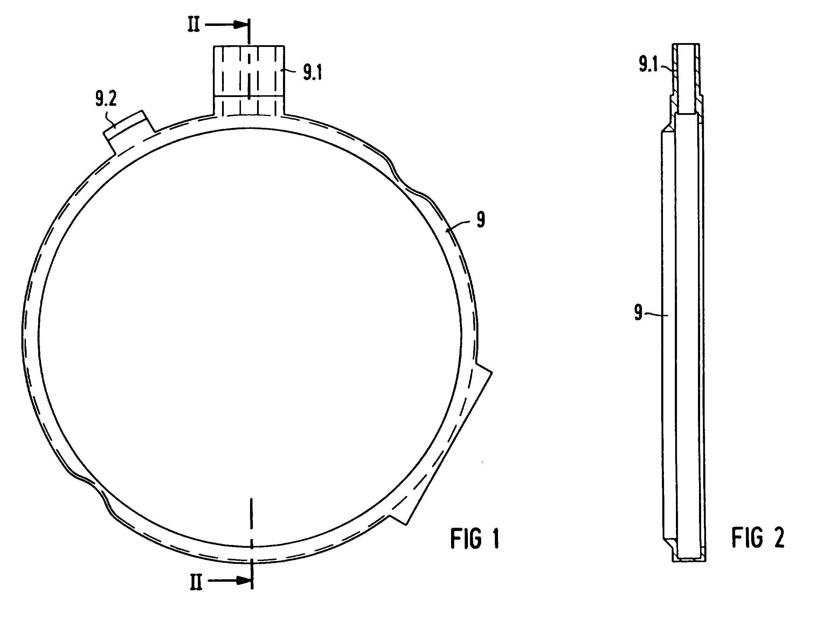

FIG 1-7 zeigen Beispiele der erfindungsgemäßen Ausführung mit einem als getrenntes Einzelbauteil gefertigten und über den Außenrand des Zwischenteils, insbesondere der Bürstentragplatte 3 aufgespannten Dichtungsringkörpers 9, der gleichzeitig zur dichtenden Herausführung von äußeren Anschlußleitungen 7 bzw.8, insbesondere Speiseleitungen, im Bereich der Dichtungsebene dient.

Die grundsätzliche Anordnung und Ausführung eines Zwischenteils in Form einer Bürstentragplatte 3 bleibt gegenüber den Ausführungsbeispielen nach FIG 8-10 erhalten. Diese Bürstentragplatte 3 ist wiederum mit ihrem Außenumfang dichtend zwischen die eine topfrandseitige Stirnseite eines Motorgehäuses 1 eines Kommutatormotors einerseits und der Stirnfläche eines Pumpengehäuses 4 andererseits fest eingespannt. Zur Abdichtung zwischen den axial voreinander liegenden gegenseitig abzudichtenden Stirnseiten dient eine in FIG 1,2 näher dargestellter Dichtungsringkörper 9 mit im wesentlichen U-förmigem Querschnitt, der über den Außenrand der Bürstentragplatte 3, insbesondere nach dem vorherigen Durchstrecken der äußeren Anschlußleitungen 7;8 und gegebenenfalls eines Entlüftungsrohrs 3.2, spannbar ist.

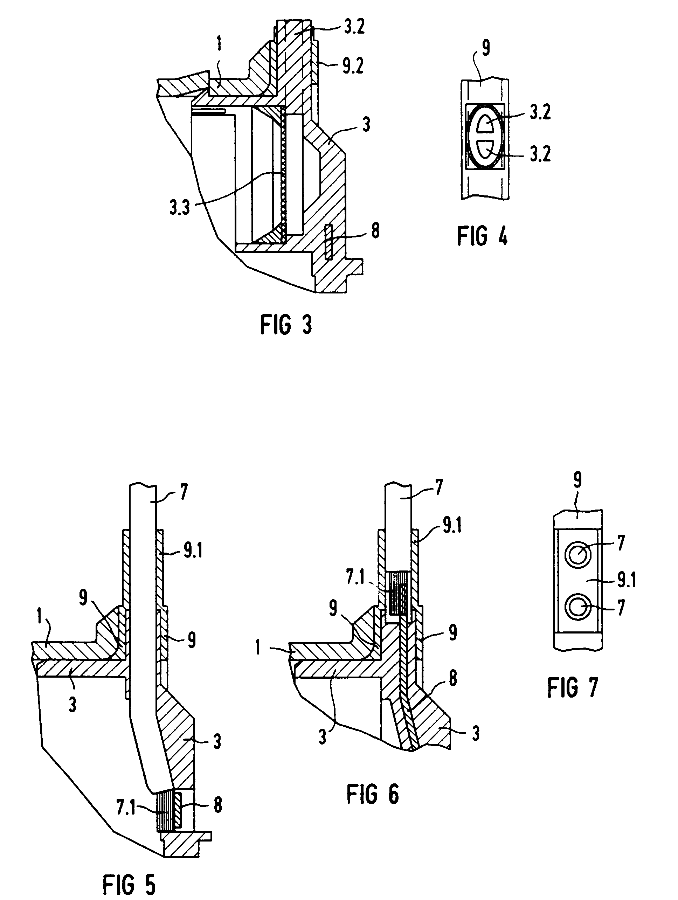

Einstückig angeformt an den Außenumfang des Dichtungsringkörpers 9 sind Dichtungsschläuche 9.1 bzw.9.2, derart daß vor dem Aufspannen des Dichtungsringkörpers 9 auf den Außenumfang der Bürstentragplatte 3 äußere Anschlußleitungen 7 bzw. das Entlüftungsrohr 3.2 mit dichter Anlage an die Dichtungsschläuche 9.1 bzw.9.2 hindurchsteckbar ist. Die äußeren Anschlußleitungen 7 sind mit einem radial inneren abisolierten Ende 7.1 mit Leitungen der Bürstentragplatte 3, z.B. durch Lötverbindung, kontaktiert; die Leitungen der Bürstentragplatte 3 sind zweckmäßigerweise als in die Bürstentragplatte 3 eingegossenes Stanzgitter 8 ausgeführt. Die Kontaktierungsstelle kann - wie in FIG 5 dargestellt - radial unterhalb oder - wie in FIG 6 dargestellt - radial oberhalb der dichtenden Anlage des Motorgehäuses 1 einerseits bzw. des Pumpengehäuses 4 andererseits an dem Außenrand der Bürstentragplatte 3 erfolgen. In jedem Einzelfall ist gewährleistet, daß entweder die nach innen durchgeführte äußere Anschlußleitung 7 bzw. die weiter nach außen herausgeführte innere Leitung des Stanzgitters 8 derart in die Bürstentragplatte 3 eingebettet ist, daß im Bereich der Herausführung der Anschlußleitungen keine Festigkeitsänderung und damit kein unterschiedliches Quetschverhalten des Dichtungsringkörpers 9 befürchtet werden muß sondern über den gesamten Dichtungsrand eine gleichmäßige Festigkeit der Dichtung gewährleistet ist.

Aus dem zuvor Beschriebenen ist ersichtlich, daß in vorteilhafter Weise die Bürstentragplatte nicht nur zur eigentlichen Aufnahme und Kontaktierung der Stromzuführungsmittel zu dem Kommutator sondern auch zur eingebetteten Herausführung von Anschlußleitungen sowie insbesondere auch zur gleichmäßigen Abdichtungsmöglichkeit über ihren gesamten Außenrand und mittels der schneidenförmigen Anlageränder 3.5 an ihrem rotorwellenseitigen Innenrand bei gleichzeitiger Zentrierung der vormontierbaren Motorbaueinheit in einer Lageraufnahme des Pumpengehäuses 4 dient.

## Patentansprüche

1. Abgedichtete Verbindungsvorrichtung zwischen zwei Gehäuse-Stirnseiten, insbesondere eines Motorgehäuses (1) einerseits und eines Pumpengehäuses (4) andererseits, mit einem plattenförmigen Zwischenteil, insbesondere einer Kunststoff-Bürstentragplatte (3), in der Ebene der Gehäuse-Stirnseiten, mit den Merkmalen:
a) Der Zwischenteil (3) liegt mit seinem Außenrand über eine elastische Dichtung dichtend gegen die Gehäuse-Stirnseiten an;
b) die elastische Dichtung besteht aus einem, insbesondere U-querschnittsförmigen, als getrenntes Bauteil auf den umlaufenden Außenrand des Zwischenteils (3) vor dessen Anlage an die Gehäuse-Stirnseiten aufspannbaren Dichtungsringkörper (9), insbesondere einem vulkanisierten Gummi-Dichtungsringkörper;
c) in den Zwischenteil (3) sind, zumindest in seinem dichtenden Anlagebereich zwischen den Gehäuse-Stirnseiten, nach außen führende Anschlußleitungen (7 bzw.8) quetschfrei eingebettet;
d) die innerhalb des Zwischenteil (3) herausgeführten Anschlußleitungen (7 bzw.8) sind radial außerhalb des dichtenden Anlagebereichs der Gehäuse-Stirnseiten durch dichtend anliegende, an den Dichtungsringkörper (9) angeformte Dichtungsschläuche (9.1) hindurchgesteckt.

2. Abgedichtete Verbindungsvorrichtung nach Anspruch 1 mit dem Merkmal:
e) Die Anschlußleitungen bestehen zumindest im Bereich der dichtenden Anlage der Dichtungsschläuche (9.1) aus isolierten elastischen Kabelleitungen (7).

3. Abgedichtete Verbindungsvorrichtung nach Anspruch 2 mit dem Merkmal:
f) Die Kabelleitungen (7) sind mit einem inneren abisolierten Ende (7.1) mit Kontaktleitungen des Zwischenteils (3), insbesondere in Form eines eingegossenen Stanzgitters (8), verbunden.

4. Abgedichtete Verbindungsvorrichtung nach zumindest einem der Ansprüche 1-3 mit den Merkmalen:
g) Das Zwischenteil (3) ist mit einem zumindest vom Inneren des einen Gehäuses, insbesondere des Motorgehäuses (1), nach außen führenden eingebetteten Entlüftungskanal (3.2) versehen;
h) der innerhalb des Zwischenteils (3) herausgeführte Entlüftungskanal (3.2) ist radial außerhalb des dichtenden Anlagebereichs der Gehäuse-Stirnseiten durch einen an ihm dichtend anliegenden, an den Dichtungsringkörper (9) angeformten Dichtungsschlauch (9.2) hindurchgesteckt.

5. Abgedichtete Verbindungsvorrichtung nach Anspruch 4 mit dem Merkmal:
i) Der Entlüftungskanal (3.2) ist gegenüber dem Inneren des einen Gehäuses, insbesondere des Motorgehäuses (1), durch eine Membrandichtung (3.3) zum Schutz gegenüber dem Eindringen äußerer Feuchtigkeit versehen.

6. Abgedichtete Verbindungsvorrichtung nach zumindest einem der Ansprüche 1-5 mit den Merkmalen:
j) Ein topfförmig ausgebildetes Motorgehäuse (1) liegt mit seinem Topfrand (1.3) unter Zwischenlage einer randseitigen Kunststoff-Bürstentragplatte (3) dichtend gegen ein Pumpengehäuse (4) an;
k) das Motor-Rotorwellenende (2.1) ist A-seitig über ein im Festsitz aufgestecktes Rotorwellenlager (6) unmittelbar in einer Lageraufnahme (4.1) des Pumpengehäuses (4) zu diesem zentriert gelagert;
l) das Rotorwellenende (2.1) ist über das A-seitig aufgesteckte Rotorwellenlager (6) in Richtung der B-Seite der Rotorwelle (2) gegen die Bürstentragplatte (3) axial abgestützt;
m) die Bürstentragplatte (3) liegt ohne kraft- und/oder formschlüssige Verbindung zu dem A-seitigen Rotorwellenlager (6) an dem Motor-Rotorwellenende (2.1) an.

7. Abgedichtete Verbindungsvorrichtung nach Anspruch 6 mit dem Merkmal:
n) Die Bürstentragplatte (3) liegt mit einem schneidenförmigen Anlagenrand (3.5) radial abstützend und dichtend gegen den Umfang des Rotorwellenendes (2.1) an.

## Claims

1. Sealed connecting device between two housing end faces, in particular of a motor housing (1) on the one hand and of a pump housing (4) on the other hand, having a platelike intermediate part, in particular a plastic brush support plate (3), in the plane of the housing end faces, having the features:
a) The outer edge of the intermediate part (3) bears sealingly against the housing end faces via an elastic seal;
b) the elastic seal comprises a sealing ring member (9), in particular a vulcanized rubber sealing ring member, which in particular is of U-shaped cross-section and can be stretched over the peripheral outer edge of the intermediate part (3), as a separate component, before the said intermediate part is placed against the housing end faces;
c) connecting leads (7 and 8) are embedded free of compression in the intermediate part (3), at least in the sealing bearing region thereof between the housing end faces;
d) the connecting leads (7 and 8) guided out inside the intermediate part (3) are passed, radially outside the sealing bearing region of the housing end faces, through flexible sealing tubes (9.1) which bear in a sealing manner and are formed integrally on the sealing ring member (9).

2. Sealed connecting device according to Claim 1, having the feature:
e) The connecting lines comprise, at least in the region of the sealing bearing of the flexible sealing tubes (9.1), insulated elastic cable lines (7).

3. Sealed connecting device according to Claim 2, having the feature:
f) An inner, stripped end (7.1) of the cable lines (7) is connected to contact lines of the intermediate part (3), in particular in the form of a cast-in pressed screen (8).

4. Sealed connecting device according to at least one of Claims 1 - 3, having the features:
g) The intermediate part (3) is provided with an embedded ventilation duct (3.2) leading outwards at least from the interior of one housing, in particular of the motor housing (1);
h) the ventilation duct (3.2) guided out inside the intermediate part (3) is passed, radially outside the sealing bearing region of the housing end faces, through a flexible sealing tube (9.2) which bears in a sealing manner on the said ventilation duct and is formed integrally on the sealing ring member (9).

5. Sealed connecting device according to Claim 4, having the feature:
i) The ventilation duct (3.2) is provided, opposite the interior of one housing, in particular of the motor housing (1), with a membrane seal (3.3) for protection against the penetration of external moisture.

6. Sealed connecting device according to at least one of Claims 1 - 5, having the features:
j) A motor housing (1) which is of pot-shaped design bears with its pot rim (1.3) sealingly against a pump housing (4), with the interposition of a rim-side plastic brush support plate (3);
k) the motor rotor-shaft end (2.1) is mounted on the A-side directly in a bearing seat (4.1) of the pump housing (4), centred with respect to the latter, by means of a rotor-shaft bearing (6) which is fixed on firmly;
l) the rotor-shaft end (2.1) is axially supported against the brush support plate (3) in the direction of the B-side of the rotor shaft (2) by means of the rotor-shaft bearing (6) fixed on the A-side;
m) the brush support plate (3) bears on the motor rotor-shaft end (2.1) without a non-positively locking and/or positively locking connection to the A-side rotor-shaft bearing (6).

7. Sealed connecting device according to Claim 6, having the feature;
n) A blade-like bearing rim (3.5) of the brush support plate (3) bears against the circumference of the rotor-shaft end (2.1) in a radially supporting and sealing manner.

## Revendications

1. Dispositif de liaison étanche entre deux faces frontales de carters, notamment d'un carter (1) de moteur d'une part et d'un carter (4) de pompe d'autre part, comportant une pièce intermédiaire en forme de plaque, en particulier une plaque porte-balais (3) en matière plastique, qui est disposée dans le plan des faces frontales de carters, présentant les particularités suivantes :
a) la pièce intermédiaire (3) s'applique de façon étanche par son bord extérieur contre les faces frontales de carters par l'intermédiaire d'un joint élastique ;
b) le joint élastique est constitué d'un carter annulaire (9) d'étanchéité ayant notamment une section transversale en forme de U, en particulier d'un carter annulaire d'étanchéité en caoutchouc vulcanisé, qui peut en tant qu'élément séparé être bloqué sur le bord extérieur circonférentiel de la pièce intermédiaire (3) avant que cette dernière soit appliquée contre les faces frontales de carters ;
c) des lignes (7 ou 8) de raccordement conduisant vers l'extérieur sont incorporées sans écrasement à la pièce intermédiaire (3), au moins dans sa zone d'application étanche entre les faces frontales de carters ;
d) les lignes (7 ou 8) de raccordement sortant vers l'extérieur au sein de la pièce intermédiaire (3) passent radialement à l'extérieur de la zone d'application étanche des faces frontales de carters par des conduits flexibles (9.1) d'étanchéité s'appliquant de façon étanche, et qui sont d'une pièce avec le carter annulaire (9) d'étanchéité.

2. Dispositif de liaison étanche selon la revendication 1, présentant la particularité suivante :
e) les lignes de raccordement sont constituées, au moins dans la zone d'application étanche des conduits flexibles (9.1) d'étanchéité, de lignes (7) de câbles élastiques isolées.

3. Dispositif de liaison étanche selon la revendication 2, présentant la particularité suivante :
f) les lignes (7) de câbles sont reliées par une extrémité (7.1) intérieure isolée à des lignes de contact de la pièce intermédiaire (3), notamment sous la forme d'une grille estampée (8) scellée.

4. Dispositif de liaison étanche selon l'une au moins des revendications 1 à 3, présentant les particularités suivantes :
g) la pièce intermédiaire (3) est pourvue d'un canal de mise à l'atmosphère (3.2) incorporé qui conduit de l'intérieur à l'extérieur d'au moins l'un des carters, notamment du carter (1) du moteur ;
h) le canal de mise à l'atmosphère (3.2) sortant vers l'extérieur au sein de la pièce intermédiaire (3) passe radialement à l'extérieur de la zone d'application étanche des faces frontales de carters par un conduit flexible (9.2) d'étanchéité, qui s'y applique de façon étanche, lequel est issu du carter annulaire (9) d'étanchéité.

5. Dispositif de liaison étanche selon la revendication 4, présentant la particularité suivante :
i) à titre de protection contre la pénétration d'humidité extérieure, le canal de mise à l'atmosphère (3.2) est pourvu d'un joint à membrane (3.3) par rapport à l'intérieur d'un des carters, notamment du carter (1) du moteur.

6. Dispositif de liaison étanche selon l'une au moins des revendications 1 à 5, présentant les particularités suivantes :
j) un carter (1) de moteur réalisé sous la forme d'un pot s'applique par son bord (1.3) de pot de façon étanche contre un carter (4) de pompe par l'intermédiaire d'une plaque porte-balais (3) en matière plastique située du côté du bord ;
k) l'extrémité (2.1) de l'arbre du rotor du moteur est logé du côté A dans un logement (4.1) de palier du carter (4) de la pompe, en étant directement centré par rapport à ce dernier par l'intermédiaire d'un palier d'arbre (6) du rotor qui est enfilé à ajustement serré.
l) en direction du côté B de l'arbre (2) du rotor, l'extrémité (2.1) de l'arbre du rotor est supportée axialement par rapport à la plaque porte-balai (3) par l'intermédiaire du palier d'arbre (6) du rotor enfilé à ajustement serré du côté A ;
m) la plaque porte-balai (3) s'applique contre l'extrémité (2.1) de l'arbre du rotor du moteur sans liaison par coopération de force et/ou par complémentarité de forme avec le palier d'arbre (6) du rotor situé du côté A.

7. Dispositif de liaison étanche selon la revendication 6, présentant la particularité suivante :
n) la plaque porte-balai (3) s'applique de façon étanche par un bord d'application (3.5) en forme de taillant en prenant radialement appui sur la circonférence de l'extrémité (2.1) de l'arbre du rotor.
